# EUROPEAN PATENT APPLICATION

(11) **EP 3 813 144 A1**
(43) Date of publication of application: **28.04.2021**
(21) Application number: 19205095.3
(22) Date of filing: 24.10.2019
(51) Int. Cl.: H01M 2/10

(54) **BATTERY MODULE AND USAGE THEREOF**

(71) Applicant: Siemens Aktiengesellschaft, 80333 München (DE)
(72) Inventor: Veres-Szekely, Vidor, 7257 Mosdós (HU); Hasznosi, Kolos, 2440 Szazhalombatta (HU); Lorincz, Daniel, 1046 Budapest (HU); Orokos-Toth, Istvan, 3300 Eger (HU); Pethes, Rita, 1116 Budapest (HU); Varga, Péter, 4028 Debrecen (HU); Villányi, Imre, 1202 Budapes (HU); Balazs, Gergely György, 1034 Budapest (HU); Debreceni, Tibor, 1125 Budapest6 (HU)
(74) Representative: Maier, Daniel Oliver

(57) **Abstract**

Battery module (1), comprising a multiplicity of battery cells and a first carrier (100), which has at least one first injection opening (161-163, 171-173), wherein the respective battery cell (10, 20, 30) is arranged with its first or second cutting plane (40) on the second side (102) of the first carrier (100), and the at least one first injection opening (161-163, 171-173) is arranged on the second side at the positive or negative contact point (18), and a first glue means (181-183, 191-193) is arranged in the least one first injection opening (161-163, 171-173) and connects the first carrier (100) with the respective battery cell (10, 20, 30).

## Description

The invention relates to a battery module and a usage thereof.

Today's battery systems with a high number of cells are often big and heavy. At mobility applications like electric cars it is not so important to achieve a weight and size optimized battery module design, since motion energy can be recovered by recuperation systems, which charge the battery back.

However, battery systems, in particular for aircraft propulsion systems, being lightweight is a major aspect of mechanical design. Energy recuperation at airborne electrical propulsion systems is not yet applicable.

Moreover, it is always beneficial for the design of battery modules whether the assembly of battery modules is easy and cost effective.

It is the objective of the invention to save weight of a battery module and further, to provide a simple assembly of components for a reliable battery module.

The problem of the invention is solved by a battery module, comprising a multiplicity of battery cells,
each cell having along a cell axis a positive contact and a negative contact, and a negative cup contact point, which is electrically connected to the negative contact, and
wherein the positive contact point and the negative cup contact point lie in a first cutting plane through the cell, which is oriented orthogonal to the cell axis, and the negative contact lies in a second cutting plane through the cell, which is oriented orthogonal to the cell axis,
and a first carrier, which has
a first side and a second side, which are opposite to each other regarding a symmetry plane of the first carrier, and
at least one first injection opening connecting the first side with the second side,
wherein the respective battery cell is arranged with its first or second cutting plane on the second side of the first carrier, and
the at least one first injection opening is arranged on the second side at the positive or negative contact point, and a first glue means is arranged in the least one first injection opening and connects the first carrier with the respective battery cell.

By the arrangement a simplified assembly of the components of the battery module is achieved. The first injection opening allows the application of glue in an easy way. The application tool for injection the glue through the first injection opening can be positioned perpendicular to the surface of the first carrier, which allows a very precise and in particular high-speed application of the glue. Thus, the glue can be applied more controlled in position and its amount. Moreover, the position of the first injection opening can be chosen for an optimal mechanical connection of the first carrier and the battery cells, which results in a very reliable battery module, in particular relevant at the use of such a battery module in an aircraft.

In a further development of the invention, the first carrier further has a first cell opening to provide access to the positive or negative contact point of a respective battery cell, and the respective battery cell is arranged with its first cutting plane on the second side of the first carrier in a way that the positive or negative contact point is accessible through the respective first cell opening from the first side of the first carrier.

Thus, a simplified electrical connection of the negative contact point from the first side of the first carrier is obtained in order to allow further weight reduction of the battery module.

In a further development of the invention, the first carrier is a circuit carrier with conductive lines on the first side and/or second side.

Thus, the first carrier is used for combined electrical and mechanical connection of the battery cells, which allows a weight reduction of the battery module.

In a further development of the invention, the first carrier has a recess to receive the respective cell in its first or second cutting plane.

Thus, a further improved mechanical connection between the first carrier and the battery cells is achieved, which results in a further improved reliability of the battery module, in particular relevant at the use of such a battery module in an aircraft.

In a further development of the invention, the second carrier has a recess to receive the respective cell in its respective first or second cutting plane.

Thus, a further improved mechanical connection between the second carrier and the battery cells is achieved, which results in a further improved reliability of the battery module, in particular relevant at the use of such a battery module in an aircraft.

In a further development of the invention, each cell has a cell body between the positive contact and the negative cup contact point, and the first glue means contacts the cell body.

It is clear, that the cell body can be e.g. the cylindrical zinc cup of the cell or even further layers on the cup.

Thus, the surface at the battery cells is increased for the glue and the assembly becomes more robust against mechanical influence.

In a further development of the invention, the first injection opening is arranged in the way, that it is only partially covered by the assembled cell in order to allow a flow through of the glue means in the assembly state, where it is not hardened.

Thus, the assembly is simplified, since the glue can be applied from the first side of the first carrier in one assembly step.

In a further development of the invention, the battery module further has
a second carrier a first side and a second side, which are opposite to each other regarding a symmetry plane of the second carrier, and
at least one second injection opening intended to receive a second glue means,
wherein the respective battery cell is arranged with its respective first or second cutting plane on the second carrier, and
the at least one second injection opening is arranged in a way that the positive or negative contact point is accessible in its respective first or second cutting plane through the at least one second injection opening, and the second glue means is arranged connecting the second carrier with the respective battery cell.

Thus, the battery module is further enhanced in mechanical perspective, in particular for the use in an aircraft operational environment.

The application tool for injection the glue through the second injection opening can be positioned perpendicular to the surface of the second carrier, which allows a very precise and in particular high-speed application of the second glue.

The problem of the invention is also being solved by a usage of a battery module within an aircraft, preferably at an aircraft with an electric propulsion system, which is supplied by the battery module according to the invention.

The invention will be explained in more detail with reference to an embodiment shown in the accompanying drawings. In the drawings show:
- Fig. 1: a perspective view of a state-of-the-art battery cell,
- Fig. 2: a side view of the battery cell of Fig. 1,
- Fig. 3: a cross section view of a first embodiment of a battery module according to the invention,
- Fig. 4: a cross section view of a second embodiment of a battery module according to the invention,
- Fig. 5: a cross section view of a third embodiment of a battery module according to the invention.

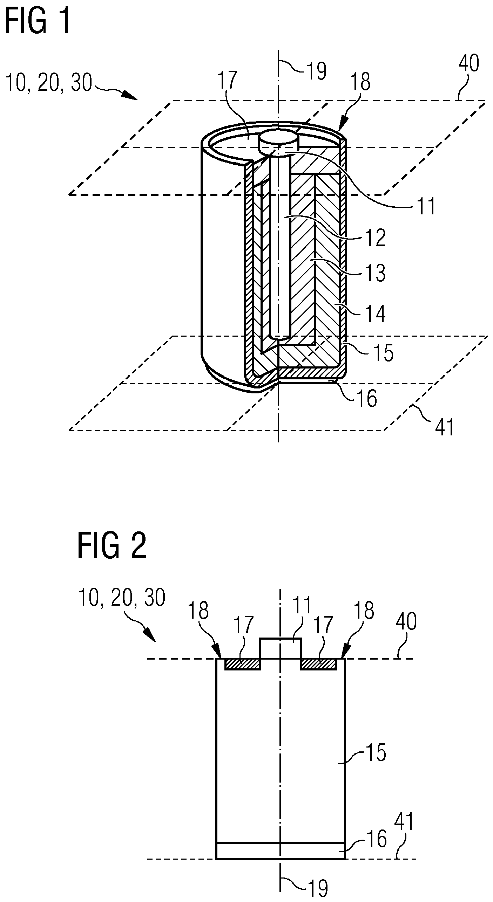

**Fig. 1** shows a perspective view of a state-of-the-art battery cell 10, 20, 30, similar to the standard battery type "AA" or "AAA".

The battery cell 10, 20, 30 comprises a metal cap as a positive contact 11, which is connected to a carbon slab as a positive electrode 12.

The positive electrode 12 is surrounded by a Mangan oxide layer 13, which in turn is surrounded by an electrolyte layer 14.

The electrolyte layer 14 is embedded into a zinc cup as a negative electrode 15.

The bottom of the zinc cup 15 provides a metal ground as a negative contact 16.

The cell 10, 20, 30 has a respective housing, primarily formed by the zinc cup 15, elongated along a cell axis 19 with two ends, where the positive contact 11 and the negative contact 16 are located respectively.

The zinc cup 15 provides further a negative cup contact point 18 on that end, where the positive contact 11 is located.

The negative cup contact point 18 and the positive contact 11 are arranged coaxial regarding the cell axis 19 and electrically as well as geometrically separated by an insulation cap 17.

Either the positive contact point 11 as well as the negative cup contact point 18 lie in a cutting plane 40 through the cell 10, 20, 30, which is oriented orthogonal to the cell axis 19.

The battery cell 10, 20, 30 provides a surface of the negative cup contact point 18, which enables a mechanical and/or electrical contact, i.e. is not covered with an insulation medium or a passivation of the surface.

**Fig. 2** shows a side view of the battery cell 10, 20, 30, illustrating that the positive contact point 11 and the negative cup contact point 18 lie in the cutting plane 40.

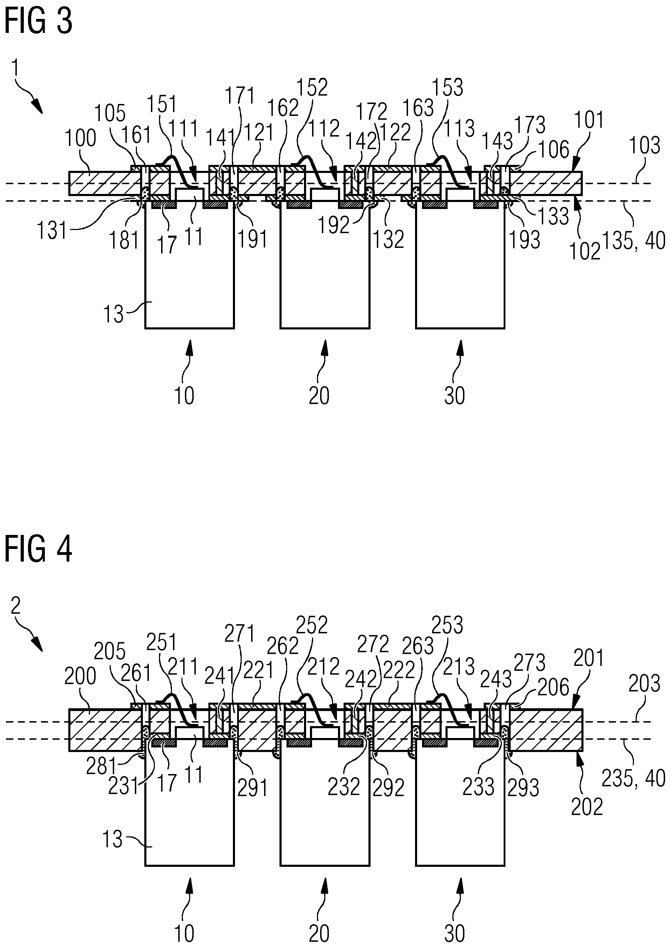

**Fig. 3** shows a first embodiment of a battery module 1, comprising a multiplicity of cells 10, 20, 30.

Each cell 10, 20, 30 of the multiplicity of battery cells kas along a cell axis 19 a positive contact 11 and a negative contact 16, and a negative cup contact point 18, which is electrically connected to the negative contact 16.

The positive contact point 11 and the negative cup contact point 18 lie in a first cutting plane 40 through the cell 10, 20, 30, which is oriented orthogonal to the cell axis 19.

The negative contact 16 lies in a second cutting plane 41 through the cell 10, 20, 30, which is oriented orthogonal to the cell axis 19.

The battery module 1 comprises further a first carrier 100, which has a first side 101 and a second side 102, which are opposite to each other regarding a symmetry plane 103 of the first carrier 100.

The first carrier 100 has first injection openings 161-163, 171-173, each connecting the first side 101 with the second side 102.

The respective battery cell 10, 20, 30 is arranged with its first cutting plane 40 on the second side 102 of the first carrier 100 at a mounting plane 135, which is located at pad areas of the first carrier 100.

The carrier 100 defines the mounting plane 135, in which the first cutting plane 40 of the cell 10, 20, 30 lies.

The first injection openings 161-163, 171-173 are arranged on the second side 102 at the negative contact point 18.

A first glue means 181-183, 191-193 is arranged in the respective first injection opening 161-163, 171-173 and connects the first carrier 100 with the respective battery cell 10, 20, 30.

The first glue means 181-183, 191-193 can be in an assembly state a liquid or fluid adhesive applied through the first side 101 and can protrude through the first injection opening 161-163, 171-173 beyond the second side 102. After hardening the glue becomes a mechanical stable connection at a final state.

The glue can be for instance a one or two components glue. Hardening of the glue can be performed for instance by thermal curing or UV curing. The application of the glue can be performed by a glue dispenser at a pick-and-place machine used often for the assembly of electronics. In such machines, mostly the dispenser head is not rotatable, and thus, the inventions allow the assembly with this kind of machines.

It is beneficial whether the first glue means 181-183, 191-193 contacts the side wall, i.e. the zinc cup 16 possibly with a (not shown) further surrounding (e.g. cylindrical) housing layer, of the respective cell 10, 20, 30 as well in order to increase the surface used for establishing the glued connection between the cell 10, 20, 30 and the first carrier 100.

In order to enhance the application of the first glue means 181-183, 191-193, it is beneficial whether the first injection opening 161-163, 171-173 is arranged in the way, that it is only partially by a mounted cell 10, 20, 30 in order to allow a flow through of the first glue means 181-183, 191-193 in the assembly state, where it is not hardened. The first glue means 181-183, 191-193 should be a fluid or liquid and is electrically conductive in order to establish the serial circuit of the battery module.

Optionally, the first carrier 100 further has first cell openings 111-113 to provide access to the positive contact point 11 of a respective battery cell 10, 20, 30.

Then, the respective battery cell 10, 20, 30 is arranged with its first cutting plane 40 on the second side 102 of the first carrier 100 in a way that the positive contact point 11 is accessible through the respective first cell opening 111-113 from the first side 101 of the first carrier 100.

The first carrier 100 is optionally a planar circuit carrier with conductive lines on the first side 101 and second side 102.

Further, the first carrier 100 has first pad areas 121-123 and an input pad 105 and an output pad 106 on the first side 101, and second pad areas 131-133 on the second side 102. The side of the second pad areas 131-133 facing outwards of the carrier 100 defines the mounting plane 135.

Wiring means 151-153, e.g. a flexible, electrically conductive bonding wire, are used to connect the input pad 105 and the first pad areas 121-122 with the positive contact 11 of the respective cell 10, 20, 30.

The negative cup contact point 18 of the respective cell is connected with the respective second pad area 131-133 by the respective first glue means 181-183, 191-193, which is electrically conductive. The second pad area 131-133 has a circular shape and the cell 10, 20, 30 is glued on it.

Further, the respective second pad area 131-133 is connected with the respective first pad area 121-223 by a respective conductive via 141-143.

Thus, a serial circuitry of the cells 10, 20, 30 is formed between the input pad 105 and the output pad 106.

**Fig. 4** shows a second embodiment of a battery module 2, comprising a multiplicity of cells 10, 20, 30.

The description of the battery module 1 from Fig. 3 still applies.

The first carrier 200 has recesses to receive the respective cells in its first cutting plane 40.

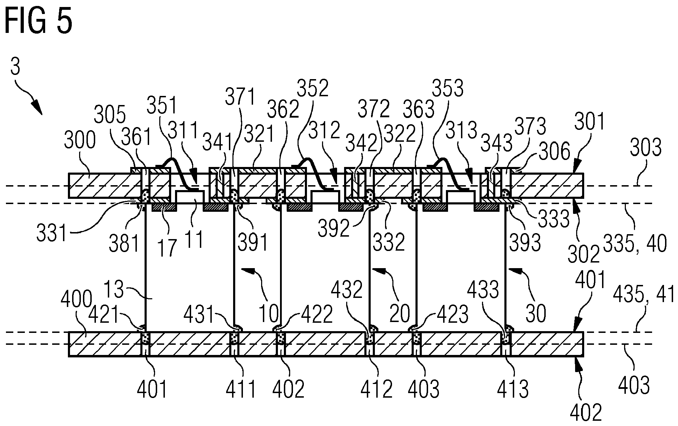

**Fig. 5** shows a third embodiment of a battery module 3, comprising a multiplicity of cells 10, 20, 30.

The description of the battery module 1 from Fig. 3 still applies.

The battery module 3 further has a second carrier 400 a first side 401 and a second side 402, which are opposite to each other regarding a symmetry plane 403 of the second carrier 400.

Further, the second carrier 400 has second injection openings 401-403, 411-413 intended to receive a second glue means 421-423, 431-433.

The respective battery cell 10, 20, 30 is arranged with its respective second cutting plane 41 on the second carrier 400.

The carrier 400 defines a mounting plane 435, in which the second cutting plane 41 lies.

The respective second injection opening 401-403, 411-413 is arranged in a way that its negative contact point 18 is accessible in its respective second cutting plane 41 through the respective second injection opening 401-403, 411-413.

The second glue means 421-423, 431-433 is arranged connecting the second carrier 400 with the respective battery cell 10, 20, 30.

Optionally, not shown in the figure, since equivalent to the described recess of the first carrier 200 in Fig. 4, the second carrier 400 has a respective recess to receive the respective cell in its respective second cutting plane 41.

Optionally, a respective cell 10, 20, 30 of the multiplicity of battery cells is arranged with its positive contact 11 at the respective carrier opening 111-113, 211-213, 311-313 of the circuit carriers 100, 200, 300 as shown in Fig. 3 to Fig. 5.

### List of reference numerals:

- 1-3: battery module
- 10, 20, 30: battery cell
- 11: Metal cap, positive contact
- 12: Carbon slab, positive electrode
- 13: Mangan oxide layer
- 14: electrolyte layer
- 15: Zinc cup, negative electrode
- 16: metal ground, negative contact
- 17: insulation cap
- 18: negative cup contact point
- 19: cell axis
- 40, 41: cutting plane
- 100, 200, 300: first planar circuit carrier
- 101, 201, 301: first side of the circuit carrier
- 102, 202, 302: second side of the circuit carrier
- 103, 203, 303: symmetry plane of the planar circuit carrier
- 105, 205, 305: input pad, first pad
- 106, 206, 306: output pad
- 111-113, 211-213, 311-313: carrier opening
- 121-122, 221-222, 321-322: first pad area
- 131-133, 231-233, 331-333: second pad area, cell pad area
- 135, 235, 335, 435: mounting/ contact plane of carrier
- 141-143, 241-243, 341-343: via
- 151-153, 251-253, 351-353: bond wire
- 161-163, 171-173, 261-263, 271-273, 361-363, 371-373, 401-403, 411-413: injection opening
- 181-183, 191-193, 281-283, 291-293, 381-383, 391-393, 421-423, 431-433: glue
- 400: second planar circuit carrier
- 401: first side of the second circuit carrier
- 402: second side of the second circuit carrier
- 403: symmetry plane of the second planar circuit carrier

## Claims

1. Battery module (1-3), comprising
a multiplicity of battery cells,
each cell (10, 20, 30) having along a cell axis (19) a positive contact (11) and a negative contact (16), and a negative cup contact point (18), which is electrically connected to the negative contact (16), and
wherein the positive contact point (11) and the negative cup contact point (18) lie in a first cutting plane (40) through the cell (10, 20, 30), which is oriented orthogonal to the cell axis (19), and
the negative contact (16) lies in a second cutting plane (41) through the cell (10, 20, 30), which is oriented orthogonal to the cell axis (19),
and a first carrier (100, 200, 300), which has
a first side (101, 201, 301) and a second side (102, 202, 302), which are opposite to each other regarding a symmetry plane (103, 203, 303) of the first carrier (100, 200, 300), and
at least one first injection opening (161-163, 171-173, 261-263, 271-273, 361-363, 371-373) connecting the first side (101, 201, 301) with the second side (102, 202, 302),
wherein the respective battery cell (10, 20, 30) is arranged with its first or second cutting plane (40) on the second side (102, 202, 302) of the first carrier (100, 200, 300), and
the at least one first injection opening (161-163, 171-173, 261-263, 271-273, 361-363, 371-373) is arranged on the second side at the positive or negative contact point (11, 18), and a first glue means (181-183, 191-193, 281-283, 291-293, 381-383, 391-393) is arranged in the least one first injection opening (161-163, 171-173, 261-263, 271-273, 361-363, 371-373) and connects the first carrier (100, 200, 300) with the respective battery cell (10, 20, 30).

2. Battery module (1-3) according to the preceding claim, wherein the first carrier (100, 200, 300) further has a first cell opening (111-113, 211-213, 311-313) to provide access to the positive or negative contact point (11, 18) of a respective battery cell (10, 20, 30), and
the respective battery cell (10, 20, 30) is arranged with its first cutting plane (40) on the second side (102, 202, 302) of the first carrier (100, 200, 300) in a way that the positive or negative contact point (11, 18) is accessible through the respective first cell opening (111-113, 211-213, 311-313) from the first side (101, 201, 301) of the first carrier (100, 200, 300).

3. Battery module (1-3) according to one of the preceding claims, wherein the first carrier is a circuit carrier with conductive lines on the first side (101, 201, 301) and/or second side (102, 202, 302).

4. Battery module (1-3) according to one of the preceding claims, wherein a respective cell (10, 20, 30) of the multiplicity of battery cells is arranged with its positive contact (11) at the respective carrier opening (111-113, 211-213, 311-313) of the circuit carrier (100, 200, 300).

5. Battery module (1-3) according to one of the preceding claims, wherein each cell (10, 20, 30) has a cell body (15) between the positive contact (11) and the negative cup contact point (18), and the first glue means (181-183, 191-193, 281-283, 291-293, 381-383, 391-393) contacts the cell body (15).

6. Battery module (1-3) according to one of the preceding claims, wherein the first injection opening (161-163, 171-173) is arranged in the way, that it is only partially covered by the assembled cell (10, 20, 30) in order to allow a flow through of the first glue means (181-183, 191-193, 281-283, 291-293, 381-383, 391-393) in an assembly state, where it is not hardened.

7. Battery module (2) according to one of the preceding claims, wherein the first carrier (200) has a recess to receive the respective cell in its first or second cutting plane (40).

8. Battery module (3) according to one of the claims 1 to 6, wherein the battery module further has
a second carrier (400) a first side (401) and a second side (402), which are opposite to each other regarding a symmetry plane (403) of the second carrier (400), and
at least one second injection opening (401-403, 411-413) intended to receive a second glue means (421-423, 431-433),
wherein the respective battery cell (10, 20, 30) is arranged with its respective first or second cutting plane (41) on the second carrier (400), and
the at least one second injection opening (401-403, 411-413) is arranged in a way that the positive or negative contact point (11, 18) is accessible in its respective first or second cutting plane (41) through the at least one second injection opening (401-403, 411-413), and
the second glue means (421-423, 431-433) is arranged connecting the second carrier (400) with the respective battery cell (10, 20, 30).

9. Battery module according to the preceding claim, wherein the second carrier has a recess to receive the respective cell in its respective first or second cutting plane.

10. Battery module (1-3) according to one of the claims 8 or 9, wherein the second injection opening (401-403, 411-413) is arranged in the way, that it is only partially covered by the assembled cell (10, 20, 30) in order to allow a flow through of the second glue means (421-423, 431-433) in an assembly state, where it is not hardened.

11. Usage of a battery module (1-3) within an aircraft, preferably at an aircraft with an electric propulsion system, which is supplied by the battery module (1-3) according to any of the preceding claims.
